# EUROPEAN PATENT APPLICATION

(11) **EP 4 800 849 A1**
(43) Date of publication of application: **02.09.2026**
(21) Application number: 25161082.0
(22) Date of filing: 28.02.2025
(51) Int. Cl.: H01R 11/28, H01R 11/12, H01R 4/30, H01R 4/38

(54) **SYSTEM FOR ASSEMBLING BUSBAR TO CONNECTOR HEADER AND METHOD OF ASSEMBLING BUSBAR TO ELECTRICAL CONNECTOR HEADER**

(71) Applicant: Volvo Truck Corporation, 405 08 Göteborg (SE)
(72) Inventor: THENOON, Mohammad, 424 57 Göteborg (SE)
(74) Representative: Zacco Sweden AB

(57) **Abstract**

A system (10), comprising: a busbar (12) comprising an opening (22); an electrical connector header (14) comprising a mounting hole (26) with an internal thread (28) oriented in a first thread direction; a fastening bolt (16) comprising an external thread (30) oriented in a second thread direction opposite the first thread direction; and a tubular adapter (18) comprising an external thread (42) configured to mate with the internal thread of said mounting hole when the tubular adapter is screwed in said mounting hole, an internal thread (46) adapted to mate with the external thread of the fastening bolt when the fastening bolt is screwed into the tubular adapter by turning the fastening bolt in a turning direction (48), and at least one internal structure (50) located at a predefined longitudinal position (44) in the tubular adapter and configured to impede rotation of the fastening bolt in relation to the tubular adapter, such that the tubular adapter rotates and moves in a longitudinal direction (56) away from the electrical connector header and establishes a physical contact between a contact surface (38) of the tubular adapter and the busbar when the fastening bolt is turned in said turning direction and rotation of the fastening bolt in relation to the tubular adapter is impeded by said at least one internal structure.

## Description

### TECHNICAL FIELD

The disclosure relates generally to connecting electrical conductors. In particular aspects, the disclosure relates to a system for assembling a busbar to an electrical connector header. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electrical connectors used for example in high voltage junction boxes in heavy-duty vehicles may have a header/interface that allows a busbar to be connected to the electrical connector. The busbar may for example be electrically and mechanically connected to the header using a screw. The screw may be passed through an opening in the busbar and screwed into a mounting hole in the header, such that the busbar gets clamped between the screw's head and a contact surface of the header surrounding the mounting hole.

### SUMMARY

According to a first aspect of the disclosure, there is provided a system, comprising: a busbar comprising an opening; an electrical connector header comprising a mounting hole with an internal thread oriented in a first thread direction; a fastening bolt comprising an external thread oriented in a second thread direction opposite the first thread direction; and a tubular adapter comprising an external thread configured to mate with the internal thread of the mounting hole of the electrical connector header when the tubular adapter is screwed in said mounting hole, an internal thread adapted to mate with the external thread of the fastening bolt when the fastening bolt is screwed into the tubular adapter by turning the fastening bolt in a turning direction, and at least one internal structure located at a predefined longitudinal position in the tubular adapter and configured to impede rotation of the fastening bolt in relation to the tubular adapter, such that the tubular adapter having been screwed into said mounting hole rotates with respect to the electrical connector header and moves in a longitudinal direction away from the electrical connector header and establishes a physical contact between a contact surface of the tubular adapter and the busbar distanced from the electrical connector header when the fastening bolt passing through the opening of the busbar and (partly) screwed into the tubular adapter is turned in said turning direction and rotation of the fastening bolt in relation to the tubular adapter is impeded by said at least one internal structure. The first aspect of the disclosure may seek to avoid high cost and/or quality issues. A technical benefit may include that a solid busbar may be used in the system, wherein the tubular adapter may adjust the tolerances that otherwise may be an issue if there initially is a gap between the (solid) busbar and the header. Solid busbars are less expensive than flexible busbars. Flexible busbars may also require a special design (for example when there is bending in the flexible area) and be sensitive for vibrations. Moreover, only minor changes to an existing electrical connector header will be needed to implement the solution of the present disclosure.

Optionally in some examples, including in at least one preferred example, said contact surface may comprise friction teeth configured to engage the busbar and stop the rotation of the tubular adapter once said physical contact is established, such that the fastening bolt is further screwed into the tubular adapter when the fastening bolt is further turned in said turning direction. In this way, the busbar may be clamped between the tubular adapter and the fastening bolt's head.

Optionally in some examples, including in at least one preferred example, the tubular adapter may comprise at least one internal longitudinal protrusion and (optionally) at least one longitudinal slit (together) arranged such that the tubular adapter expands radially when the fastening bolt is further screwed into the tubular adapter. A technical benefit may include that the tubular adapter may expand against the electrical connector header to have tight connection between them, which in turn may increase the force by which the busbar is clamped between the tubular adapter and the head of the fastening bolt. Moreover, each at least one internal structure configured to impede rotation of the fastening bolt may be formed by a respective end portion (e.g. a chamfered end) of the at least one internal longitudinal protrusion.

Optionally in some examples, including in at least one preferred example, said contact surface may be formed on a flange at one end of the tubular adapter.

Optionally in some examples, including in at least one preferred example, the external thread of the tubular adapter may have a first pitch, wherein the internal thread of the tubular adapter has a second pitch, and wherein the first pitch is higher than the second pitch. A technical benefit may include that not much turning of the fastening bolt is needed to move the tubular adapter away from the electrical connector header and establish the physical contact with the busbar.

Optionally in some examples, including in at least one preferred example, the tubular adapter can be made of copper.

Optionally in some examples, including in at least one preferred example, the busbar may be a solid busbar.

Optionally in some examples, including in at least one preferred example, the internal thread of the mounting hole and the external thread of the tubular adapter may each be a left-handed thread, wherein the external thread of the fastening bolt and the internal thread of the tubular adapter each is a right-handed thread, and wherein said turning direction is a clockwise direction. A technical benefit may include that the busbar may be assembled to the electrical connector header by turning/screwing the fastening bolt in the "normal" direction. In other examples, the internal thread of the mounting hole and the external thread of the tubular adapter may each be a right-handed thread, wherein the external thread of the fastening bolt and the internal thread of the tubular adapter each is a left-handed thread, and wherein said turning direction is a counterclockwise direction.

Optionally in some examples, including in at least one preferred example, the tubular adapter may have a first end and a second end opposite said first end, wherein said contact surface is formed on a flange of the tubular adapter at said first end, wherein the external thread of the tubular adapter extends substantially from the flange to said predefined longitudinal position located between the first end and the second end, wherein the internal thread of the tubular adapter extends substantially from the first end to said predefined longitudinal position, and wherein the tubular adapter further comprises at least one internal longitudinal protrusion and at least one longitudinal slit both extending from said predefined longitudinal position to the second end of the tubular adapter.

According to a second aspect of the disclosure, there is provided a vehicle comprising at least one system according to the first aspect. The at least one system may for example be included in at least one high voltage junction box of the vehicle.

According to a third aspect of the disclosure, there is provided a method of assembling a busbar to an electrical connector header, the method comprising: screwing a tubular adapter into a mounting hole in the electrical connector header, the tubular adapter comprising an external thread oriented in a first thread direction and mating with an internal thread of the mounting hole, an internal thread oriented in a second thread direction opposite the first thread direction and adapted to mate with an external thread of a fastening bolt when the fastening bolt is screwed into the tubular adapter by turning the fastening bolt in a turning direction, and at least one internal structure located at a predefined longitudinal position in the tubular adapter and configured to impede rotation of the fastening bolt in relation to the tubular adapter; passing the fastening bolt through an opening in the busbar and screwing the fastening bolt into the tubular adapter until the fastening bolt reaches the at least one internal structure; and continue turning the fastening bolt in said turning direction as rotation of the fastening bolt in relation to the tubular adapter is impeded by said at least one internal structure, whereby the tubular adapter rotates and moves in a longitudinal direction away from the electrical connector header and establishes a physical contact between a contact surface of the tubular adapter and the busbar. The third aspect of the disclosure may seek to avoid high cost and/or quality issues. A technical benefit may include that a solid busbar may be used in the method, wherein the tubular adapter may adjust the tolerances that otherwise may be an issue if there initially is a gap between the (solid) busbar and the header. Solid busbars are less expensive than flexible busbars. Flexible busbars may also require a special design (for example when there is bending in the flexible area) and be sensitive for vibrations. Moreover, only minor changes to an existing electrical connector header will be needed to implement the solution of the present disclosure.

Optionally in some examples, including in at least one preferred example, said contact surface may comprise friction teeth engaging the busbar to stop the rotation of the tubular adapter once said physical contact is established, wherein the method comprises further turning the fastening bolt in said turning direction as the rotation of the tubular adapter is stopped, whereby the fastening bolt is further screwed into the tubular adapter. In this way, the busbar may be clamped between the tubular adapter and the fastening bolt's head.

Optionally in some examples, including in at least one preferred example, the tubular adapter may comprise at least one internal longitudinal protrusion and (optionally) at least one longitudinal slit (together) arranged such that the tubular adapter expands radially when the fastening bolt is further screwed into the tubular adapter. A technical benefit may include that the tubular adapter may expand against the electrical connector header to have tight connection between them, which in turn may increase the force by which the busbar is clamped between the tubular adapter and the head of the fastening bolt.

Optionally in some examples, including in at least one preferred example, said contact surface may be formed on a flange at one end of the tubular adapter.

Optionally in some examples, including in at least one preferred example, the external thread of the tubular adapter may have a first pitch, wherein the internal thread of the tubular adapter has a second pitch, and wherein the first pitch is higher than the second pitch. A technical benefit may include that not much turning of the fastening bolt is needed to move the tubular adapter away from the electrical connector header and establish the physical contact with the busbar.

Optionally in some examples, including in at least one preferred example, the tubular adapter can be made of copper.

Optionally in some examples, including in at least one preferred example, the busbar may be a solid busbar.

Optionally in some examples, including in at least one preferred example, the internal thread of the mounting hole and the external thread of the tubular adapter may each be a left-handed thread, wherein the external thread of the fastening bolt and the internal thread of the tubular adapter each is a right-handed thread, and wherein said turning direction is a clockwise direction. A technical benefit may include that the busbar may be assembled to the electrical connector header by turning/screwing the fastening bolt in the "normal" direction. In other examples, the internal thread of the mounting hole and the external thread of the tubular adapter may each be a right-handed thread, wherein the external thread of the fastening bolt and the internal thread of the tubular adapter each is a left-handed thread, and wherein said turning direction is a counterclockwise direction.

Optionally in some examples, including in at least one preferred example, the tubular adapter may have a first end and a second end opposite said first end, wherein said contact surface is formed on a flange of the tubular adapter at said first end, wherein the external thread of the tubular adapter extends substantially from the flange to said predefined longitudinal position located between the first end and the second end, wherein the internal thread of the tubular adapter extends substantially from the first end to said predefined longitudinal position, and wherein the tubular adapter further comprises at least one internal longitudinal protrusion and at least one longitudinal slit both extending from said predefined longitudinal position to the second end of the tubular adapter.

According to a fourth aspect of the disclosure, there is provided a tubular adapter for assembling a first electrical conductor to a second electrical conductor together with a fastening bolt, the tubular adapter comprising: an external thread oriented in a first thread direction and configured to mate with an internal thread of a mounting hole in the second electrical conductor when the tubular adapter is screwed into said mounting hole; an internal thread oriented in a second thread direction opposite the first thread direction and adapted to mate with an external thread of the fastening bolt when the fastening bolt is screwed into the tubular adapter; and at least one internal structure located at a predefined longitudinal position in the tubular adapter and configured to impede rotation of the fastening bolt in relation to the tubular adapter. The first electrical conductor may for example be a busbar, and the second electrical conductor may be an electrical connector header (as in the previous aspects).

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIGs. 1a****-c** are perspective views of an exemplary system according to an example.
**FIG. 2** is a perspective view of an exemplary electrical connector header according to an example.
**FIG. 3a** is a perspective view of an exemplary adapter according to an example.
**FIG. 3b** is a sectional perspective view of the adapter in **FIG. 3a****.**
**FIG. 4a** is a sectional perspective view of the system in **FIG. 1a****.**
**FIG. 4b** is a partial sectional perspective view of the bolt and adapter of the system in **FIG. 1a****.**
**FIG. 5** is a flow chart of an exemplary method of assembling a busbar to an electrical connector header according to an example.

### DETAILED DESCRIPTION

The detailed description set forth below provides information and examples of the disclosed technology with sufficient detail to enable those skilled in the art to practice the disclosure.

As mentioned in the BACKGROUND, electrical connectors used for example in high voltage junction boxes in heavy-duty vehicles may have a header/interface that allows a busbar to be connected to the electrical connector. The busbar may for example be electrically and mechanically connected to the header using a screw. The screw may be passed through an opening in the busbar and screwed into a mounting hole in the header, such that the busbar gets clamped between the screw's head and a contact surface of the header surrounding the mounting hole.

When a solid busbar is assembled to the header, tolerance may be an issue. Namely, if there initially is a gap between the busbar and the header, the header may be bent when the screw is tightened, which could cause quality issues. To overcome this, a flexible busbar could be used. However, a flexible busbar has a higher cost compared to a solid busbar, and a flexible busbar may also require more space than a solid busbar.

The present disclosure may seek to avoid the above-mentioned high cost and/or quality issues. According to a first aspect of the disclosure, there is provided a system, comprising: a busbar comprising an opening; an electrical connector header comprising a mounting hole with an internal thread oriented in a first thread direction; a fastening bolt comprising an external thread oriented in a second thread direction opposite the first thread direction; and a tubular adapter comprising an external thread configured to mate with the internal thread of the mounting hole of the electrical connector header when the tubular adapter is screwed in said mounting hole, an internal thread adapted to mate with the external thread of the fastening bolt when the fastening bolt is screwed into the tubular adapter by turning the fastening bolt in a turning direction, and at least one internal structure located at a predefined longitudinal position in the tubular adapter and configured to impede rotation of the fastening bolt in relation to the tubular adapter, such that the tubular adapter having been screwed into said mounting hole rotates with respect to the electrical connector header and moves in a longitudinal direction away from the electrical connector header and establishes a physical contact between a contact surface of the tubular adapter and the busbar distanced from the electrical connector header when the fastening bolt passing through the opening of the busbar and (partly) screwed into the tubular adapter is turned in said turning direction and rotation of the fastening bolt in relation to the tubular adapter is impeded by said at least one internal structure. A technical benefit may include that a solid busbar may be used in the system, wherein the tubular adapter may adjust the tolerances that otherwise may be an issue if there initially is a gap between the (solid) busbar and the header. Solid busbars are less expensive than flexible busbars, and flexible busbars may also require a special design (for example when there is bending in the flexible area) and be sensitive for vibrations. Moreover, only minor changes to an existing electrical connector header will be needed to implement the solution of the present disclosure. Such changes may include providing the internal thread (oriented in the first thread direction) in the mounting hole.

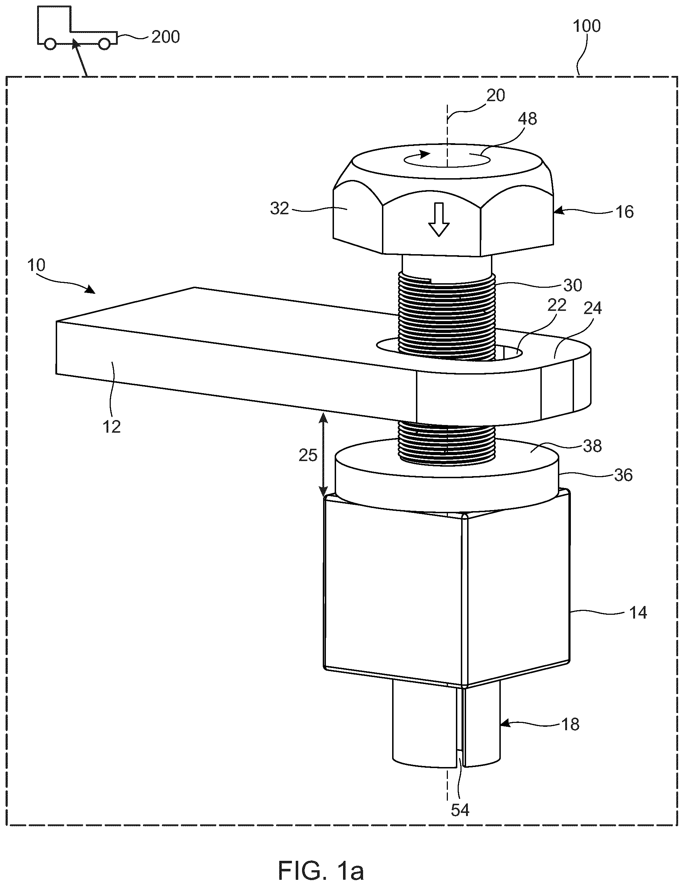

**FIGs. 1a****-c** illustrate an exemplary system 10 for assembling a busbar 12 to an electrical connector header 14 in different states of assembly according to an example. The system 10 comprises the busbar 12, the electrical connector header 14, a fastening bolt 16, and a tubular adapter 18. Moreover, reference sign 20 designates a longitudinal axis (of the system 10). The system 10 may for example be housed inside a high voltage junction box, schematically indicated by reference sign 100. The high voltage junction box 100, in turn, may be comprised in a heavy-duty vehicle 200, such as a truck or bus or construction equipment.

The busbar 12 (or bus bar) comprises an opening 22. The opening 22 may be used when assembling the busbar 12 to the electrical connector header 14. The opening 22 may be a through opening. The opening 22 may be provided at one end 24 of the busbar 12. The busbar 12 may be a solid busbar. The busbar 12 may for example be made of copper or aluminium. The busbar 12 may have a rectangular cross section. During at least part of the assembly, the busbar 12 may have a fixed position relative to the electrical connector header 14. The busbar 12 may for example (always) be distanced from the electrical connector header 16 by a gap 25. The gap 25 may for example be ≥5 mm.

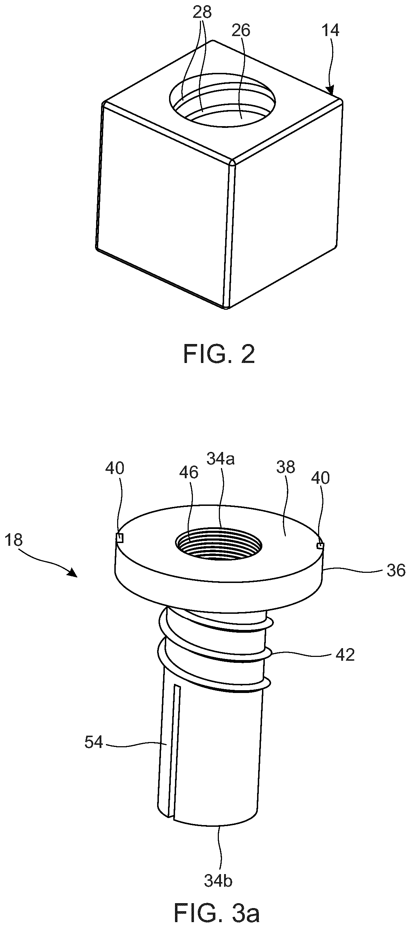

With further reference to **FIG. 2****,** the electrical connector header 14 comprises a mounting hole 26 with an internal thread 28 oriented in a first thread direction. The internal thread 28 may for example be left-handed. The mounting hole 26 may or may not be a through hole. The electrical connector header 14 may be a 90° (orientation) header. The electrical connector header 14 may for example be cube-shaped. The electrical connector header 14 may form part of a high voltage connector.

The fastening bolt 16 comprises an external thread 30 oriented in a second thread direction opposite the above-mentioned first thread direction. The external thread 30 may for example be right-handed. The fastening bolt 16 may further comprise a head 32.

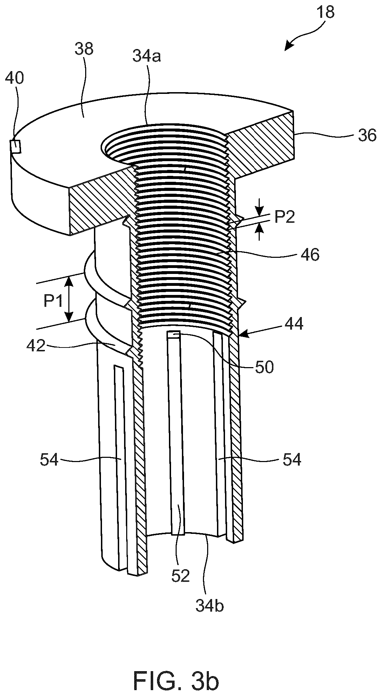

With further reference to **FIGs. 3a****-b,** the tubular adapter 18 may generally have the form of a hollow cylinder. The tubular adapter 18 may have a first end 34a and a second end 34b opposite the first end 34a. Moreover, the tubular adapter may comprise a flange 36, namely an external flange. The flange 36 may be located at the first end 34a of the tubular adapter 18. A contact surface 38 may be formed on (the face of) the flange 36. The contact surface 38 (or flange face) may comprise (friction) teeth 40. The friction teeth 40 may be positioned at the outer circumference of the contact surface 38. The friction teeth 40 may be evenly distributed along the outer circumference of the contact surface 38. The number of friction teeth 40 may for example be two. The tubular adapter 18 can for example be made of copper. The tubular adapter 18 can be made in one piece.

The tubular adapter 18 comprises an external thread 42. The external thread 42 is configured to mate with the internal thread 28 of the mounting hole 26 of the electrical connector header 14, when the tubular adapter 18 is screwed into said mounting hole 26. Accordingly, this external thread 42 may be left-handed. The external thread 42 may (substantially) extend from the flange 36 to a predefined longitudinal position 44 located between the first and second ends 34a-b. The external thread 42 of the tubular adapter 18 may have a first pitch P1.

The tubular adapter 18 further comprises an internal thread 46. The internal thread 46 is adapted to mate with the external thread 30 of the fastening bolt 16, when the fastening bolt 16 is screwed into the tubular adapter 18 by turning the fastening bolt 16 in a turning direction 48. Accordingly, this internal thread 46 may be right-handed and the turning direction 48 may be a clockwise direction. The internal thread 46 may (substantially) extend from the first end 34a of the tubular adapter 18 to the aforementioned predefined longitudinal position 44. The internal thread 46 of the tubular adapter 18 may have a second pitch P2. The first pitch P1 of the external thread 42 of the tubular adapter 18 may be higher than the second pitch P2 of the internal thread 46 tubular adapter 18 (P1>P2).

The tubular adapter 18 further comprises at least one internal structure 50 located at the predefined longitudinal position 44 in the tubular adapter 18. The at least one internal structure 50 is configured to impede rotation of the fastening bolt 16 in relation to the tubular adapter 18, as will be discussed further hereinbelow.

Each at least one internal structure 50 may for example be a chamfered end of at least one internal longitudinal protrusion (or bar) 52 of the tubular adapter 18, which at least one internal longitudinal protrusion 52 may extend from the predefined longitudinal position 44 and towards the second end 34b of the tubular adapter 18. The number of internal structures 50 (and internal longitudinal protrusions 52) may for example be two or four. The internal structures 50 (and internal longitudinal protrusions 52) may be evenly distributed around the inner circumference of the tubular adapter 18.

The tubular adapter 18 may further comprise at least one longitudinal slit 54, for example two longitudinal slits 54, extending from extend from the predefined longitudinal position 44 and towards the second end 34b of the tubular adapter 18. The longitudinal slits 54 may be evenly distributed around the circumference of the tubular adapter 18. For example, the longitudinal slits 54 may positioned at 0° and 180°, whereas the internal longitudinal protrusions 52 may be posited at 90° and 180° (or at 60°, 120°, 240°, and 320° in case of four internal longitudinal protrusions), as seen in the circumferential direction.

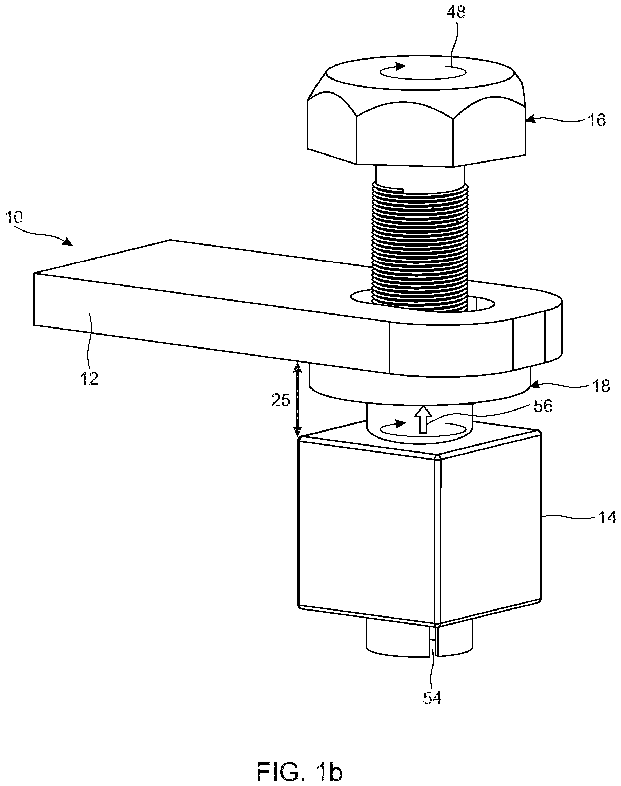

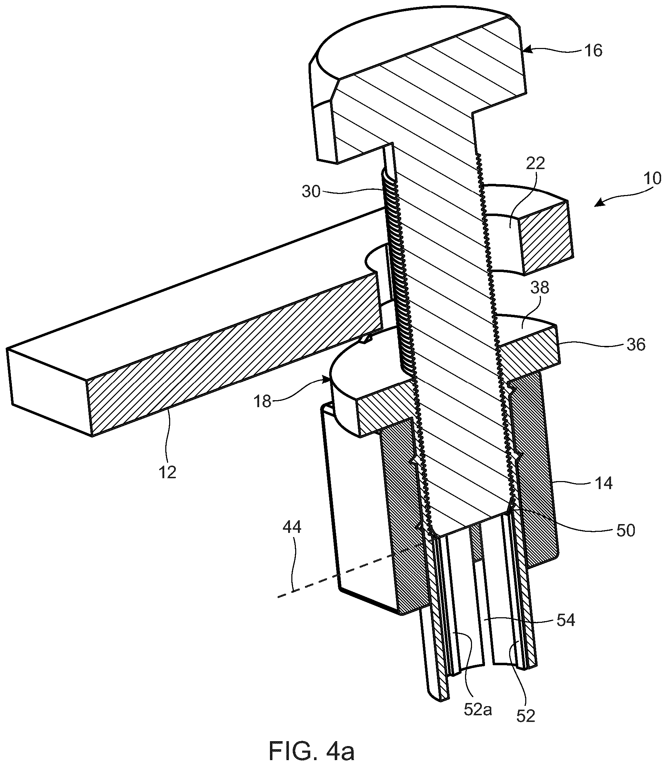

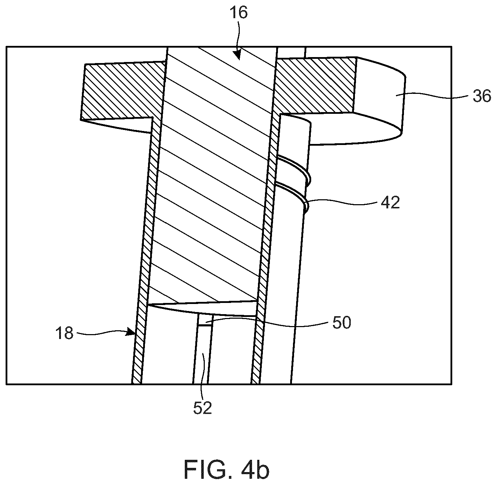

As mentioned above, the at least one internal structure 50 is configured to impede rotation of the fastening bolt 16 in relation to the tubular adapter 18. Namely, the at least one internal structure 50 is configured to impede rotation of the fastening bolt 16 in relation to the tubular adapter 18 such that the tubular adapter 18 having been screwed into the mounting hole 26 (see **FIG. 1a** and **FIGs. 4a****-b**) rotates with respect to the electrical connector header 14 and moves in a longitudinal direction 56 away from the electrical connector header 14 and establishes a physical contact (see **FIG. 1b**) between the contact surface 38 and the busbar 12 when the fastening bolt 16 passing through the opening 22 of the busbar 12 and partly screwed into the tubular adapter 18 is further turned in the turning direction 48 and rotation of the fastening bolt 16 in relation to the tubular adapter 18 is impeded by the at least one internal structure 50. In other words, when one starts to tighten the fastening bolt 16, the first turns of the thread 30 will go in the adapter 18 normally until the thread 30 hits the structures 50 inside the adapter 18, then the adapter 18 will start to rotate. And since the adapter 18 has an anticlockwise thread 42 with the header 14, that will make the adapter 18 go higher until touching the lower surface of the busbar 12. In **FIG. 4b****,** it can be seen that (the tip of) the fastening bolt 16 contacts the internal structures (e.g. chamfered ends) 50, which stops the fastening bolt 16 from being further screwed into the tubular adapter 18, and instead further turning of the fastening bolt 16 in direction 48 causes the tubular adapter 18 to rotate out of the mounting hole 26 due to the left-handed threads 28 and 42.

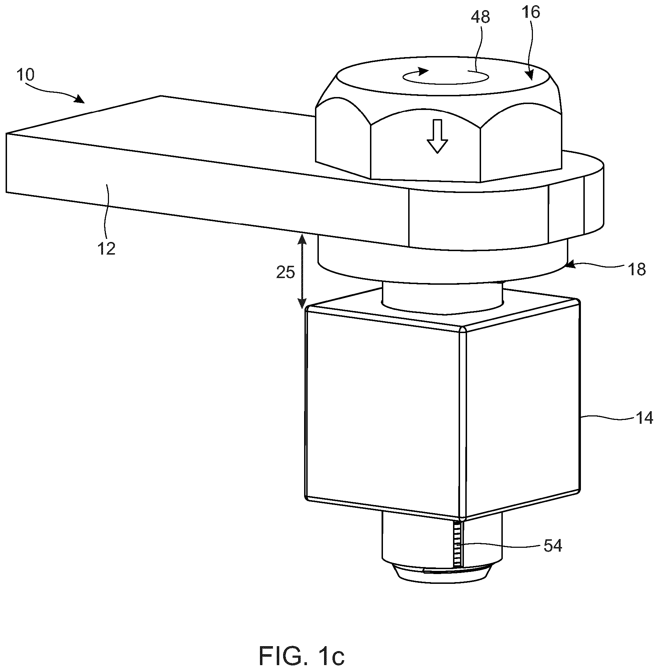

Once the aforementioned physical contact between the contact surface 38 and the busbar 12 is established, the friction teeth 40 on the contact surface 38 engaging the busbar 12 may help to stop the rotation of the tubular adapter 18, such that the fastening bolt 16 is further screwed into the tubular adapter 18 when the fastening bolt 16 is further turned in the turning direction 48, until the busbar 12 is clamped between the flange 36 and head 32 (see **FIG. 1c**). That is, the system 10 may be designed such that the turning torque of the fastening bolt 16 here may overcome the rotation impeding force of the at least one internal structure 50. Moreover, the at least one longitudinal protrusion 52 and the at least one longitudinal slit 54 may together be arranged such that the tubular adapter 18 expands radially when the fastening bolt 16 is further screwed into the tubular adapter 18 beyond the predefined longitudinal position 44. In other words, the friction teeth 40 on the adapter 18 will stop the rotation and make the fastening bolt 16 engage in the adapter 18, and the lower portion of the adapter 18 will expand against the header 14 to have tight connection between them, which will increase the clamping force between the fastening bolt 16 and the adapter 18 (**FIG. 1c**).

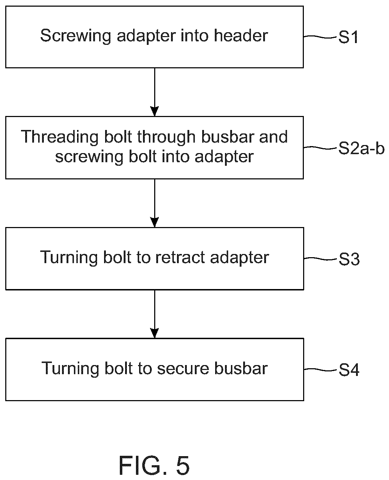

Turning to **FIG. 5, FIG. 5** is a flow chart of an exemplary method of assembling the busbar 12 to the electrical connector header 14. The method may correspond to use of the system 10. The method could be performed manually by at least one operator using appropriate tools or automatically by at least one robot.

The method may comprise screwing S1 the tubular adapter 18 into the mounting hole 26 in the electrical connector header 14, wherein the external thread 42 of the tubular adapter 18 mates with the internal thread 28 of the mounting hole 26. The tubular adapter 18 may be screwed into the mounting hole 26 unit the flange 36 of the tubular adapter 18 abuts the electrical connector header 14.

The method may further comprise passing (or threading) S2a the fastening bolt 16 through the opening 22 in the busbar 12, and then screwing S2b (see **FIG. 1a**) the fastening bolt 16 into the tubular adapter 18 by turning the fastening bolt 16 in the turning direction 48 until the fastening bolt 16 reaches and physically contacts the at least one internal structure 50 in the tubular adapter 18 (see e.g. **FIG. 4b**).

The method further comprises continue turning S3 the fastening bolt 16 in the turning direction 48 as rotation of the fastening bolt 16 in relation to the tubular adapter 18 is impeded by the at least one internal structure 50, whereby the tubular adapter 18 rotates and moves in the longitudinal direction 56 away from the electrical connector header 14 and establishes physical contact between the contact surface 38 and the busbar 12 (see **FIG. 1b**).

The method may then comprise further turning S4 the fastening bolt 16 in the same turning direction 48 as the rotation of the tubular adapter 18 is stopped (at least partly due to the friction teeth 40), whereby the fastening bolt 16 is further screwed into the tubular adapter 18, preferably until the busbar 12 is clamped between the flange 36 and head 32 (see **FIG. 1c**). When the fastening bolt 16 is further screwed into the tubular adapter 18 in step S4, the tubular adapter 18 may expand radially due to the at least one internal longitudinal protrusion 52 and the at least one longitudinal slit 54.

Example 1: A system, comprising: a busbar comprising an opening; an electrical connector header comprising a mounting hole with an internal thread oriented in a first thread direction; a fastening bolt comprising an external thread oriented in a second thread direction opposite the first thread direction; and a tubular adapter comprising an external thread configured to mate with the internal thread of the mounting hole of the electrical connector header when the tubular adapter is screwed in said mounting hole, an internal thread adapted to mate with the external thread of the fastening bolt when the fastening bolt is screwed into the tubular adapter by turning the fastening bolt in a turning direction, and at least one internal structure located at a predefined longitudinal position in the tubular adapter and configured to impede rotation of the fastening bolt in relation to the tubular adapter, such that the tubular adapter having been screwed into said mounting hole rotates with respect to the electrical connector header and moves in a longitudinal direction away from the electrical connector header and establishes a physical contact between a contact surface of the tubular adapter and the busbar distanced from the electrical connector header when the fastening bolt passing through the opening of the busbar and screwed into the tubular adapter is turned in said turning direction and rotation of the fastening bolt in relation to the tubular adapter is impeded by said at least one internal structure.

Example 2: The system of example 1, wherein said contact surface comprises friction teeth configured to engage the busbar and stop the rotation of the tubular adapter once said physical contact is established, such that the fastening bolt is further screwed into the tubular adapter when the fastening bolt is further turned in said turning direction.

Example 3: The system of any of examples 1-2, wherein the tubular adapter comprises at least one internal longitudinal protrusion and optionally at least one longitudinal slit arranged such that the tubular adapter expands radially when the fastening bolt is further screwed into the tubular adapter.

Example 4: The system of any of examples 1-3, wherein said contact surface is formed on a flange at one end of the tubular adapter.

Example 5: The system of any of examples 1-4, wherein the external thread of the tubular adapter has a first pitch, wherein the internal thread of the tubular adapter has a second pitch, and wherein the first pitch is higher than the second pitch.

Example 6: The system of any of examples 1-5, wherein the tubular adapter is made of copper.

Example 7: The system of any of examples 1-6, wherein the busbar is a solid busbar.

Example 8: The system of any of examples 1-7, wherein the internal thread of the mounting hole and the external thread of the tubular adapter each is a left-handed thread, wherein the external thread of the fastening bolt and the internal thread of the tubular adapter each is a right-handed thread, and wherein said turning direction is a clockwise direction.

Example 9: The system of example 1, wherein the tubular adapter has a first end and a second end opposite said first end, wherein said contact surface is formed on a flange of the tubular adapter at said first end, wherein the external thread of the tubular adapter extends substantially from the flange to said predefined longitudinal position located between the first end and the second end, wherein the internal thread of the tubular adapter extends substantially from the first end to said predefined longitudinal position, and wherein the tubular adapter further comprises at least one internal longitudinal protrusion and at least one longitudinal slit both extending from said predefined longitudinal position to the second end of the tubular adapter.

Example 10: A vehicle comprising at least one system according to any of examples 1-9.

Example 11: A method of assembling a busbar to an electrical connector header, the method comprising: screwing a tubular adapter into a mounting hole in the electrical connector header, the tubular adapter comprising an external thread oriented in a first thread direction and mating with an internal thread of the mounting hole, an internal thread oriented in a second thread direction opposite the first thread direction and adapted to mate with an external thread of a fastening bolt when the fastening bolt is screwed into the tubular adapter by turning the fastening bolt in a turning direction, and at least one internal structure located at a predefined longitudinal position in the tubular adapter and configured to impede rotation of the fastening bolt in relation to the tubular adapter; passing the fastening bolt through an opening in the busbar and screwing the fastening bolt into the tubular adapter until the fastening bolt reaches the at least one internal structure; and continue turning the fastening bolt in said turning direction as rotation of the fastening bolt in relation to the tubular adapter is impeded by said at least one internal structure, whereby the tubular adapter rotates and moves in a longitudinal direction away from the electrical connector header and establishes a physical contact between a contact surface of the tubular adapter and the busbar.

Example 12: The method of example 11, wherein said contact surface comprises friction teeth engaging the busbar to stop the rotation of the tubular adapter once said physical contact is established, and wherein the method comprises further turning the fastening bolt in said turning direction as the rotation of the tubular adapter is stopped, whereby the fastening bolt is further screwed into the tubular adapter.

Example 13: The method of any of examples 11-12, wherein the tubular adapter comprises at least one internal longitudinal protrusion and optionally at least one longitudinal slit arranged such that the tubular adapter expands radially when the fastening bolt is further screwed into the tubular adapter.

Example 14: The method of any of examples 11-13, wherein said contact surface is formed on a flange at one end of the tubular adapter.

Example 15: The method of any of examples 11-14, wherein the external thread of the tubular adapter has a first pitch, wherein the internal thread of the tubular adapter has a second pitch, and wherein the first pitch is higher than the second pitch.

Example 16: The method of any of examples 11-15, wherein the tubular adapter is made of copper.

Example 17: The method of any of examples 11-16, wherein the busbar is a solid busbar.

Example 18: The method of any of examples 11-17, wherein the internal thread of the mounting hole and the external thread of the tubular adapter each is a left-handed thread, wherein the external thread of the fastening bolt and the internal thread of the tubular adapter each is a right-handed thread, and wherein said turning direction is a clockwise direction.

Example 19: The method of example 11, wherein the tubular adapter has a first end and a second end opposite said first end, wherein said contact surface is formed on a flange of the tubular adapter at said first end, wherein the external thread of the tubular adapter extends substantially from the flange to said predefined longitudinal position located between the first end and the second end, wherein the internal thread of the tubular adapter extends substantially from the first end to said predefined longitudinal position, and wherein the tubular adapter further comprises at least one internal longitudinal protrusion and at least one longitudinal slit both extending from said predefined longitudinal position to the second end of the tubular adapter.

Example 20: A tubular adapter for assembling a first electrical conductor to a second electrical conductor together with a fastening bolt, the tubular adapter comprising: an external thread oriented in a first thread direction and configured to mate with an internal thread of a mounting hole in the second electrical conductor when the tubular adapter is screwed into said mounting hole; an internal thread oriented in a second thread direction opposite the first thread direction and adapted to mate with an external thread of the fastening bolt when the fastening bolt is screwed into the tubular adapter; and at least one internal structure located at a predefined longitudinal position in the tubular adapter and configured to impede rotation of the fastening bolt in relation to the tubular adapter.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system (10), comprising:
a busbar (12) comprising an opening (22);
an electrical connector header (14) comprising a mounting hole (26) with an internal thread (28) oriented in a first thread direction;
a fastening bolt (16) comprising an external thread (30) oriented in a second thread direction opposite the first thread direction; and
a tubular adapter (18) comprising an external thread (42) configured to mate with the internal thread of the mounting hole of the electrical connector header when the tubular adapter is screwed in said mounting hole, an internal thread (46) adapted to mate with the external thread of the fastening bolt when the fastening bolt is screwed into the tubular adapter by turning the fastening bolt in a turning direction (48), and at least one internal structure (50) located at a predefined longitudinal position (44) in the tubular adapter and configured to impede rotation of the fastening bolt in relation to the tubular adapter, such that the tubular adapter having been screwed into said mounting hole rotates with respect to the electrical connector header and moves in a longitudinal direction (56) away from the electrical connector header and establishes a physical contact between a contact surface (38) of the tubular adapter and the busbar distanced from the electrical connector header when the fastening bolt passing through the opening of the busbar and screwed into the tubular adapter is turned in said turning direction and rotation of the fastening bolt in relation to the tubular adapter is impeded by said at least one internal structure.

2. The system of claim 1, wherein said contact surface comprises friction teeth (40) configured to engage the busbar and stop the rotation of the tubular adapter once said physical contact is established, such that the fastening bolt is further screwed into the tubular adapter when the fastening bolt is further turned in said turning direction.

3. The system of any of claims 1-2, wherein the tubular adapter comprises at least one internal longitudinal protrusion (52) and optionally at least one longitudinal slit (54) arranged such that the tubular adapter expands radially when the fastening bolt is further screwed into the tubular adapter.

4. The system of any of claims 1-3, wherein said contact surface is formed on a flange (36) at one end (34a) of the tubular adapter.

5. The system of any of claims 1-4, wherein the external thread of the tubular adapter has a first pitch (P1), wherein the internal thread of the tubular adapter has a second pitch (P2), and wherein the first pitch is higher than the second pitch.

6. The system of any of claims 1-5, wherein the tubular adapter is made of copper.

7. The device of any of claims 1-6, wherein the busbar is a solid busbar.

8. The device of any of claims 1-7, wherein the internal thread of the mounting hole and the external thread of the tubular adapter each is a left-handed thread, wherein the external thread of the fastening bolt and the internal thread of the tubular adapter each is a right-handed thread, and wherein said turning direction is a clockwise direction.

9. The device of claim 1, wherein the tubular adapter has a first end (34a) and a second end (34b) opposite said first end, wherein said contact surface is formed on a flange (36) of the tubular adapter at said first end, wherein the external thread of the tubular adapter extends substantially from the flange to said predefined longitudinal position located between the first end and the second end, wherein the internal thread of the tubular adapter extends substantially from the first end to said predefined longitudinal position, and wherein the tubular adapter further comprises at least one internal longitudinal protrusion (52) and at least one longitudinal slit (54) both extending from said predefined longitudinal position to the second end of the tubular adapter.

10. A vehicle (200) comprising at least one system (10) according to any of claims 1-9.

11. A method of assembling a busbar (12) to an electrical connector header (14), the method comprising:
screwing (S1) a tubular adapter (18) into a mounting hole (26) in the electrical connector header, the tubular adapter comprising an external thread (42) oriented in a first thread direction and mating with an internal thread (28) of the mounting hole, an internal thread (46) oriented in a second thread direction opposite the first thread direction and adapted to mate with an external thread (30) of a fastening bolt (16) when the fastening bolt is screwed into the tubular adapter by turning the fastening bolt in a turning direction (48), and at least one internal structure (50) located at a predefined longitudinal position (44) in the tubular adapter and configured to impede rotation of the fastening bolt in relation to the tubular adapter;
passing (S2a) the fastening bolt through an opening (22) in the busbar and screwing (S2b) the fastening bolt into the tubular adapter until the fastening bolt reaches the at least one internal structure; and
continue turning (S3) the fastening bolt in said turning direction as rotation of the fastening bolt in relation to the tubular adapter is impeded by said at least one internal structure, whereby the tubular adapter rotates and moves in a longitudinal direction (56) away from the electrical connector header and establishes a physical contact between a contact surface (38) of the tubular adapter and the busbar.

12. The method of claim 11, wherein said contact surface comprises friction teeth (40) engaging the busbar to stop the rotation of the tubular adapter once said physical contact is established, and wherein the method comprises further turning (S4) the fastening bolt in said turning direction as the rotation of the tubular adapter is stopped, whereby the fastening bolt is further screwed into the tubular adapter.

13. The method of any of claims 11-12, wherein the tubular adapter comprises at least one internal longitudinal protrusion (52) and optionally at least one longitudinal slit (54) arranged such that the tubular adapter expands radially when the fastening bolt is further screwed into the tubular adapter.

14. The method of any of claims 11-13, wherein said contact surface is formed on a flange (36) at one end (34a) of the tubular adapter.

15. The method of any of claims 11-14, wherein the external thread of the tubular adapter has a first pitch (P1), wherein the internal thread of the tubular adapter has a second pitch (P2), and wherein the first pitch is higher than the second pitch.
